# EUROPEAN PATENT APPLICATION

(11) **EP 4 257 017 A1**
(43) Date of publication of application: **11.10.2023**
(21) Application number: 22382325.3
(22) Date of filing: 06.04.2022
(51) Int. Cl.: A47J 43/07, A47B 91/04

(54) **FOOT AND SUPPORT ASSEMBLY FOR A KITCHEN APPLIANCE AND KITCHEN APPLIANCES COMPRISING THE SAME**

(71) Applicant: Taurus Research and Development S.L.U., 25790 Oliana (ES)
(72) Inventor: CODINA VILANA, Antoni, 25790 Oliana (ES); ALET VIDAL, Josep, 25790 Oliana (ES); TRENCH ROCA, Lluís, 08650 Sallent (ES)
(74) Representative: Torner, Juncosa I Associats, SL

(57) **Abstract**

The present invention relates to a foot for a kitchen appliance for processing food comprising: a single body of an elastomeric material; a deformable neck for attachment to a part of the kitchen appliance; a base constituting a single support surface of the foot; and wherein said single body of elastomeric material comprises: a first section having a progressive narrowing from the base; an annular portion defining a step with respect to the end of said first section and said neck; a neck starting from said annular portion, said neck being coaxial with said first section having a progressive narrowing; and an annular flange deriving from a distal portion of said neck and defining an annular throat together with said step.

The present invention also relates to a support assembly for a kitchen appliance, to a kitchen appliance comprising said foot and to a kitchen appliance comprising said support assembly.

## Description

### Technical field

The present invention relates to the field supports for kitchen appliances and, in particular, to the field of supports for kitchen appliances for processing food and to the field of support assemblies for kitchen appliances for processing food. The present invention also relates to a kitchen appliance comprising said support and to a kitchen appliance comprising said support assembly.

### State of the Art

Kitchen appliances, including kitchen appliances for processing food, are widely used in most households, specially to perform, or assist a user to perform, one or more different operations, such as mixing, slicing, chopping, blending, etc.

Depending on the operation performed and/or the type of food processed, the kitchen appliance can produce noticeable vibrations, which can cause the kitchen appliance to 'shake. Commonly, such vibrations are at its highest when processing heavy offset loads.

In addition to being annoying, said vibrations can also be dangerous, as depending on the amplitude and frequency of the vibrations, the kitchen appliance can 'walk' on the surface on which it sits. By 'walking' it is understood as moving in any direction on a plane parallel to the surface on which the kitchen appliance sits, i.e., the kitchen appliance can move in a x-y plane. Moreover, under certain amplitude and frequency of the vibrations, the kitchen appliance can also 'jump', i.e., can also move in direction perpendicular to the surface on which it sits or in a z direction. Thus, depending on the amplitude and frequency of the vibrations, the kitchen appliance can move in any direction. Said movement can also include rotations.

In order to prevent, or reduce, said undesired vibrations, restrictions may be applied to the design of the kitchen appliance, for example, in terms of, for example, size, mass, speed, etc. This may lead to suboptimal performance of the kitchen appliance as the designers may need to compromise the performance of the appliance in order to mitigate the vibrations.

In order to dampen the vibrations, and not to reduce the vibrations as such, it is known in the art to use specially designed feet to sustain the kitchen appliance on the surface in which is to be used, said feet being designed to dampen the vibrations produced by the operation of the kitchen appliance.

EP 2410201 B1 discloses a foot for a table top food processor made of a single body of an elastomeric material comprising a base that connects to the food processor, a connection portion which projects upwards, said connecting portion being rooted in a shell part and a shell wall extending over only a portion of the height of the connection portion, said shell wall furthermore producing an additional support depending on a displacement of the connection portion, wherein a shell bottom, which is surrounded by the shell wall, bears the connection portion.

It is also known in the art, in particular from GB 2550630 A, to provide the kitchen appliance for processing food comprising a sensor for sensing the weight of the kitchen appliance and a controller for controlling the motor in dependence on the weight sensed by the sensor. Said sensor may be a weight distribution sensor. In such kitchen appliances, the controller operates the motor (speed, direction, etc.) trying to minimize vibrations produced by the operation of the appliance. In the kitchen appliance disclosed by GB 2550630 A, the controller may even prevent operation of the kitchen appliance if an uneven weigh distribution is sensed, which can be an inconvenience to the user. Moreover, these arrangements are complex and expensive.

EP 2410199 A1 discloses a support assembly for a tabletop food processor, wherein the food processor comprises a projection, which is preferably made of a hard plastic, and that projects downwards and rests on an elastomer part which forms a base, said projection comprising a shell part which opens downwards and the elastomer part comprising a mandril which engages in the shell part. The accommodation of the mandril part in the shell part is such that the projection is mounted in such a way that it can slide relative to an elastomer part which forms the base and comprises the mandril part. In the support assembly disclosed in EP 2410199 A1 the projection is frictionally engaged with the base.

### Brief description of the invention

The present invention is directed towards a foot for a kitchen appliance for processing food made of a single body of an elastomeric material that effectively dampens the vibrations produced by the operation of the kitchen appliance, thereby preventing the kitchen appliance to 'shake' or 'walk'. In order to achieve the above, according to a first aspect of the present invention it is disclosed a foot for a kitchen appliance for processing food comprising: a single body of an elastomeric material; a support base on a support surface of the foot; a deformable neck at least in a transversal direction relative to a longitudinal axis of the foot and for attachment to a part of the kitchen appliance; wherein said base constitutes a single support surface of the foot; and wherein said single body of elastomeric material comprises: a first section having a progressive narrowing from the support base following an axial rising direction of the foot; an annular portion defining a step with respect to the end of said first section and said neck; the neck starting from said annular portion; and an annular flange deriving from a distal portion of said neck and defining an annular throat together with said step of the annular portion.

The foot according to the first aspect of the present invention effectively dampens the unwanted oscillations produced by the operation of the kitchen appliance and is robust and relatively easy to manufacture as it is made of a single piece of elastomeric material. This is particularly relevant when compared to other known foots in the prior art, wherein the foots have complex geometries, sometimes made of thin walls, often made of two or more pieces of different materials, which result in relatively complex and fragile foots.

According to the first aspect of the invention, the support base may define a concave surface. Said concave surface, among other benefits, provides absorption by the support base of possible irregularities of the support surface of the kitchen appliance in such a way that even if the support surface is uneven, at least the periphery, or distal region, of the concave surface will be in contact with said uneven or irregular support surface.

According to the first aspect of the invention, the foot may comprise at least one through hole between the annular portion and the concave surface of the support base. Preferably, the foot comprises at least two of said through holes, said at least two through holes being uniformly distributed along said annular portion. Said at least one through hole ensure that the concave surface of the support base does not provide a suction effect. A suction effect of the support base should be preferably avoided as otherwise the kitchen appliance would stick to the surface on which its resting, thereby complicating, for example, the placement of the kitchen appliance in another location, for example, for storage or any other reason.

According to the first aspect of the invention, said single body may be a body of revolution and said neck may be coaxial with said first section having a progressive narrowing.

According to the first aspect of the invention, said first section having a progressive narrowing may comprise a first portion of an essentially cylindrical shape and a second portion with progressive narrowing. Preferably, said second portion with progressive narrowing has a tapered shape.

According to the first aspect of the invention, said step may be defined by said annular portion.

According to the first aspect of the invention, said annular flange may define a distal surface and a surface proximal to said first section having a progressive narrowing, said distal surface and/or said proximal surface being perpendicular to the axial direction of the foot.

According to the first aspect of the invention, the distal surface of said annular flange may be coplanar with a distal end of the neck.

According to the first aspect of the invention, said annular flange may have a progressive narrowing following the axial rising direction of the foot. Preferably, said annular flange having a progressive narrowing comprises a first portion of an essentially cylindrical shape and a second portion with progressive narrowing.

According to the first aspect of the invention, the neck may comprise at its distal end at least one hole for receiving a connecting element with the kitchen appliance. Preferably, said at least one hole for receiving a connecting element with the kitchen appliance is a blind hole.

According to the first aspect of the invention, the elastomeric material from which the foot is made is an absorbent material having a high slip coefficient. Preferably, said material is polyurethane (PU).

According to a second aspect of the present invention, it is also disclosed a support assembly for a kitchen appliance, comprising: a foot according to the first aspect of the present invention; a coupling piece for being attached to a portion a base of the kitchen appliance and snap-fitted to a distal portion of the single body of the foot.

According to the second aspect of the invention, said coupling piece may be integral with the kitchen appliance, and in particular, with a base of the kitchen appliance or may be a separate element that can be attached or fixed to the kitchen appliance.

According to the second aspect of the invention, the coupling piece may define a cavity for the reception of at least the annular flange of the foot, said cavity comprising at least one lip for snap fitting with the annular throat of the foot. Preferably, said at least one lip of the cavity of the coupling piece dimensionally interferes with the neck of the foot.

According to the second aspect of the invention, the annular portion and the proximal surface of the annular flange may be stops for limiting the movement of the at least one lip of the cavity of the coupling piece.

According to the second aspect of the invention, said cavity may comprise two or more of said lips uniformly distributed along the inner perimeter of said cavity.

According to the second aspect of the invention, said cavity may define a base for resting on the distal end of the neck of the foot.

According to the second aspect of the invention, the coupling piece may further comprise a through hole for the passage of a connecting element with the kitchen appliance, said hole of the coupling piece being coaxial with a corresponding hole for receiving said connecting element at the distal end of the neck of the foot.

According to the second aspect of the invention, the coupling piece may be coaxial with the foot.

According to the second aspect of the invention, the coupling piece may be made of a rigid material. Preferably, said rigid material is polymeric. More preferably, said rigid material is made of acrylonitrile butadiene styrene (ABS), polyamide, polybutylene terephthalate (PBT) or any other material having similar properties.

According to a third aspect of the present invention, it is disclosed kitchen appliance for processing food comprising at least three feet according to the first aspect of the present invention. Preferably, said at least three feet are uniformly distributed, e.g., located at the vertices of an equilateral triangle Although more than three feet can be used, three is considered the minimum number of feet to provide a stable support to the kitchen appliance.

Although in a kitchen appliance different kind of feet could be used, it is preferred that all feet are of the same kind, as otherwise each foot would behave in a different manner and could compromise the operation of the kitchen appliance, and in particular, could compromise the dampening of the vibrations produced by the operation of the kitchen appliance.

According to a fourth aspect of the present invention, it is disclosed a kitchen appliance for processing food comprising at least three support assemblies according to the second aspect of the present invention. Preferably, said at least three support assemblies are uniformly distributed, e.g., located at the vertices of an equilateral triangle. Although more than three support assemblies can be used, three is considered the minimum number of support assemblies to provide a stable support to the kitchen appliance.

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and non-limitative manner, in which:
FIG. 1 shows a perspective view of an exemplary embodiment of a foot for a kitchen appliance for processing food according to the present invention.
FIG. 2 shows a section view of the exemplary embodiment of a foot for a kitchen appliance shown in FIG. 1.
FIG. 3 shows a perspective view of an exemplary embodiment of a support assembly for a kitchen appliance according to the present invention.
FIG. 4 shows a section view of the exemplary embodiment of a support assembly for a kitchen appliance shown in FIG. 3.
Fig. 5 shows a bottom view of the coupling piece of the exemplary embodiment of a support assembly for a kitchen appliance shown in FIGS. 3 and 4.
FIG. 6 shows a section view of further exemplary embodiments of a support assembly for a kitchen appliance according to the present invention.

### Detailed description of an embodiment

The foregoing and other advantages and features will be more fully understood from the following detailed description of an embodiment with reference to the accompanying drawings, to be taken in an illustrative and not limitative way.

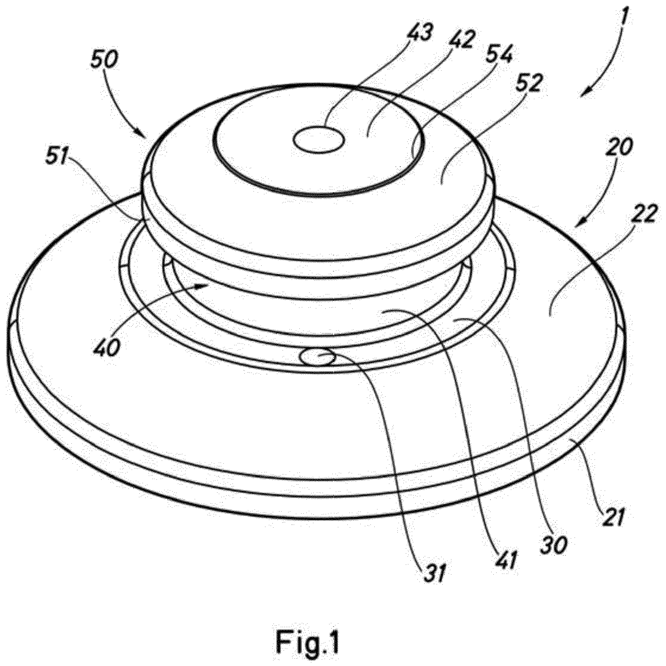

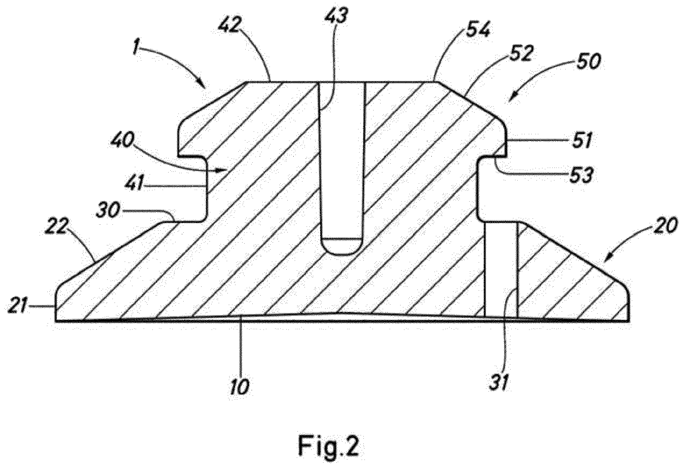

FIGS. 1 and 2 show a perspective and a section view, respectively, of an exemplary embodiment of a foot 1 for a kitchen appliance for processing food. The foot 1 of the exemplary embodiment shown comprises a single body, which in general will be a revolution body, made of an elastomeric material comprising a support base 10 which constitutes a single support surface of the foot, a first section 20 having a progressive narrowing or thinning from the support base 10 following an axial direction of the foot in an ascending manner, an annular portion 30 defining a step with respect to the end of said first section 20 and a neck 40 starting from said annular portion 30, said neck 40 being coaxial with said first section 20 and an annular flange 50 deriving from a distal portion of said neck 40 and defining an annular throat 41 together with said step.

Said neck 40 is deformable at least in a transversal direction with regard to the longitudinal axis of the foot and is configured for being attached to a part of the kitchen appliance, preferably the base of the kitchen appliance.

In the exemplary embodiment shown, the first section 20 having a progressive narrowing comprises a first portion 21 having an essentially cylindrical shape and a second portion 22 with progressive narrowing. Said second portion 22 with progressive narrowing can have a tapered shape, as in the case shown in FIGS. 1 and 2. However, other embodiments can lack said first portion 21 having an essentially cylindrical shape and the second portion 22 with progressive narrowing can have a shape different than tapered as long as it narrows progressively.

In a similar manner to the first section 20 having a progressive narrowing, in the exemplary embodiment shown the annular flange 50 has a progressive narrowing following an axial direction of the foot. In particular, in the exemplary embodiment shown, said annular flange 50 having a progressive narrowing comprises a first portion 51 of an essentially cylindrical shape and a second portion 52 with progressive narrowing. Said progressive narrowing follows the axial rising direction of the foot 1.

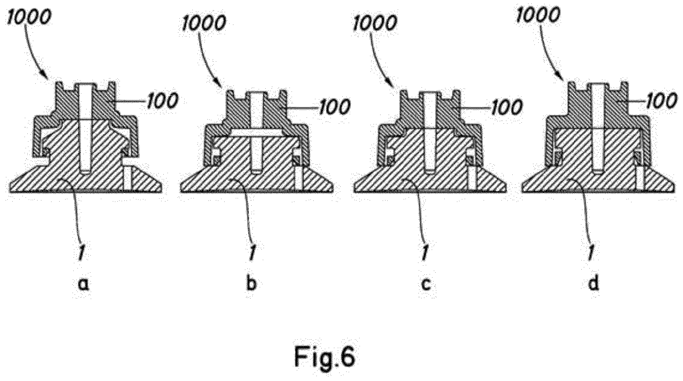

The annular flange 50 of the exemplary embodiment shown defines a distal surface 54 and a surface 53 proximal to the first section 20 having a progressive narrowing, both surfaces 53, 54 being perpendicular to the longitudinal axis of the foot. However, in other embodiments none or only one of said surfaces can be perpendicular to the longitudinal axis of the foot. In the exemplary embodiment shown in FIGS. 1 and 2, the distal surface 54 of the annular flange 50 and the distal end 42 of the neck 40 are coplanar, thus defining a single surface. However, in other embodiments, such surfaces 42, 54 may not be coplanar (see FIG. 6), thus making them clearly discernible.

In the exemplary embodiment shown, the step defined by the annular portion 30 is substantially perpendicular to the longitudinal axis of the foot 1, but in other embodiments said step may be inclined towards the uppermost part of the foot, i.e., the step may have a progressive narrowing.

In the exemplary embodiment shown, the base 10, which constitutes a single support surface of the foot 1 is circular and defines a concave surface, as can clearly be seen in the section view of FIG. 2. Said concave surface of the base 10 allows said base to absorb irregularities of the support surface, for example, when said support surface is uneven. In case the support surface is irregular, said concave surface can deform thereby adapting to the irregular surface, so that at least the periphery or distal region of said concave surface is in contact with the support surface of the kitchen appliance.

The annular portion 30 of the exemplary embodiment shown comprises three through holes 31 between said annular portion 30 and the base 10. Said holes 31 are uniformly distributed along the circumference of said annular portion. The through holes 31 are advantageous as they avoid the risk that the concave surface of the base 10 provides a suction effect that could get the kitchen appliance stuck on the surface on which it rests. Such suction effect would be undesired, especially when the kitchen appliance is to be moved from one place to another frequently, as it might be the case in most domestic kitchens. Although advantageous, said through holes 31 are not essential or mandatory, as even if some suction effect is provided, it is still possible to lift the kitchen appliance and move it elsewhere, although it requires more force. Moreover, in situation where the kitchen appliance is not to be moved, to some extent, it might be advantageous to have a suction effect between the support base 10 and the surface on which the kitchen appliance is resting.

The foot 1 of the exemplary embodiment shown further comprises a hole 43 for the reception of a connecting element with the kitchen appliance. Said connecting element may be held in the hole 43, for example, by dimensional interference, among other possibilities. As in the exemplary embodiment shown, said hole 43 is preferably a blind hole having a depth that extends beyond the step defined by the annular portion 30. The length or extension of the blind hole 43 may however be limited to that of the neck 40 or even be shorter or in some embodiments may even be non-existent.

The aforementioned shape of the foot 1 for a kitchen appliance for processing food together with the elastomeric material from which is made effectively dampens the vibrations (mainly in a transversal direction) produced by the operation of the kitchen appliance, thus avoiding that said kitchen appliance 'walks', 'jumps' and/or 'shakes' on the surface on which is resting, because of such vibrations.

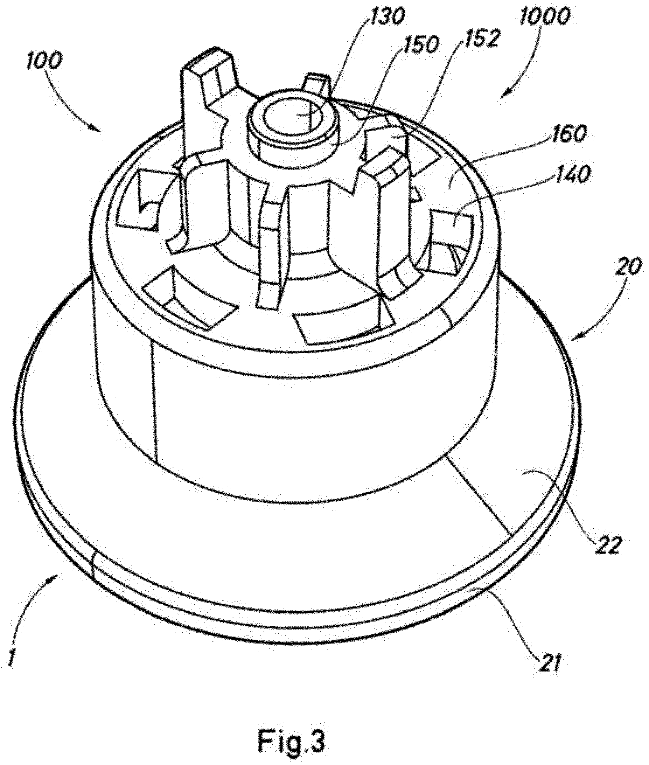

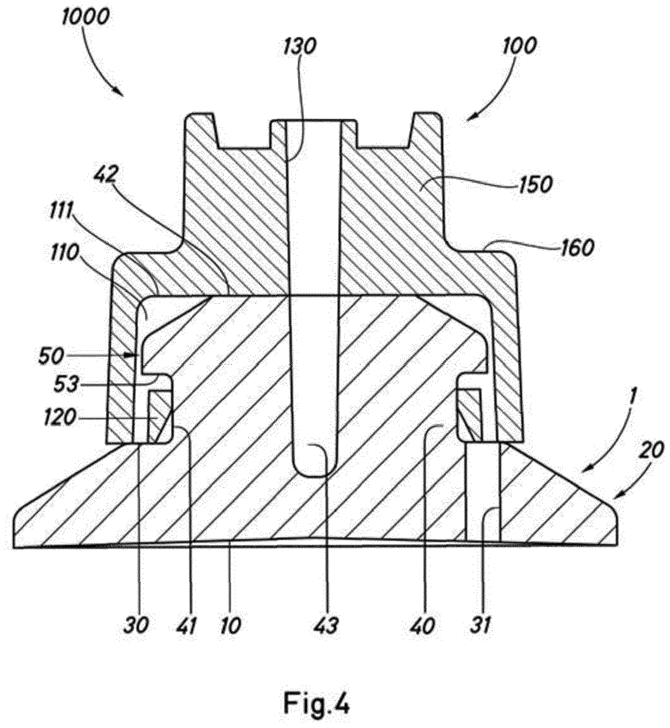

FIGS. 3 and 4 show, respectively, a perspective and a section view of an exemplary embodiment of a support assembly 1000 for a kitchen appliance according to the present invention. The support assembly 1000 shown comprises a coupling piece 100 around the neck 40, snap-fitted to a distal portion of the foot 1 of the exemplary embodiment of a foot 1 shown in FIGS. 1 and 2.

The coupling piece 100 of the exemplary embodiment shown defines a cavity 110 for the reception of the annular flange 50 of the foot 1. Said cavity 110 comprises a plurality of lips 120 for snap fitting with the annular throat 41 of the foot 1, so that the foot 1 is attached to the coupling piece 100, which in turn may also be attached or coupled to the kitchen appliance or even be integral with the kitchen appliance, in particular with its base.

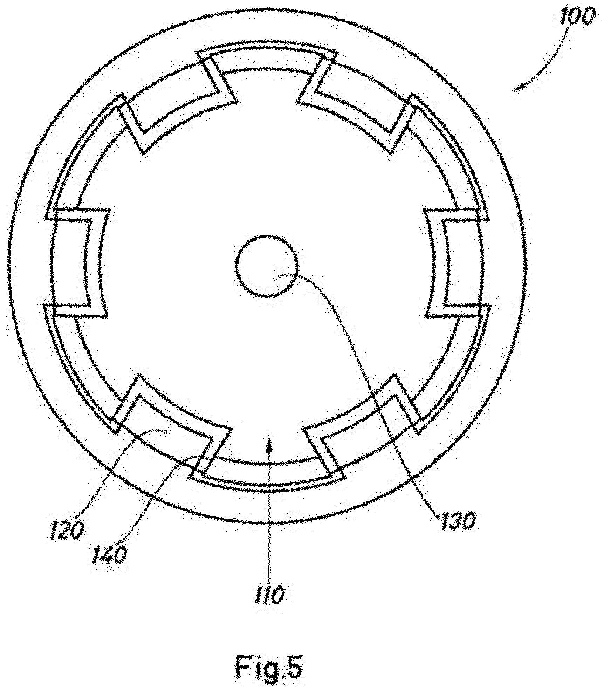

On its outer base 160 the coupling piece 100 of this exemplary embodiment comprises a plurality of openings 140, each opening 140 being vertically aligned with a corresponding lip 120 (see FIG. 5). Said outer base 160 can be perpendicular to the longitudinal axis of the foot 1 and of the support assembly 1000, or not. In the exemplary embodiment shown, said outer base 160 further comprises a central protrusion 150 surrounded by fins 152, shaped so that it can interlock with a corresponding recess of matching shape in a coupling area of the base of the kitchen appliance (not shown). Among other benefits, the fin like elements 152 of the protrusion 150 prevent rotation of the coupling piece 100, and thereby of the support assembly 1000, in respect to the kitchen appliance, and in particular, in respect to the longitudinal axis of the support assembly.

The diameter of the coupling element 100 of the exemplary embodiment shown is substantially smaller than the one of the first section 20 having a progressive narrowing of the foot 1.

As can be seen in great detail in the section view of FIG. 4, the coupling piece 100 comprises a through hole 130 for the passage of a connecting element with the kitchen appliance, said hole 130 of the coupling piece 100 being coaxial with a corresponding hole 43 above mentioned located at the distal end 42 of the foot 1.

In the exemplary embodiment shown, the base 111 of the cavity 110 of the coupling piece 100 rests on the distal end 42 of the neck 40 of the foot 1. However, in other embodiments the foot 1 and the coupling piece 100 may be configured so that at least part of the base 111 of the cavity does not rest on the distal end 42 of the neck 40 (see FIG. 6).

In the example shown, the annular portion 30 defining the step of the foot 1 and the proximal surface 53 of the annular flange 50 function as stops for limiting the movement of the lips 120 of the cavity 110 of the coupling piece 100.

In this exemplary embodiment, the coupling piece 100 is made of a rigid polymeric material, whereas the foot 1 is made of a soft absorbent polymeric material having a high slip coefficient.

FIG. 5 shows a bottom view of the coupling piece 100 of the exemplary embodiment of a support assembly shown in FIGS. 3 and 4. As previously stated, in the exemplary embodiment shown the coupling piece 100 comprises a plurality of lips 120 arranged in annular manner and vertically aligned with a corresponding opening 140. Among other benefits, said openings 140 may ease the manipulation of the lips 120.

At the centre of the coupling piece 100 can be seen the through hole 130 which is aligned with the longitudinal axis of the coupling piece 100 and blind hole 43 of the support assembly 1000.

Fig. 6 shows a section view of four additional exemplary embodiments of a support assembly according to the present invention. As can be seen, these additional exemplary embodiments have variations in the coupling piece 100 and/or the foot 1 shape when compared to the exemplary embodiment shown and described hereinabove. For clarity purposes, in FIGS. 6a to 6b only a few reference numerals have been depicted. Reference numerals used hereinbelow refer to the same or equivalent elements than the ones described hereinabove and in FIGS. 1 to 5.

FIGS. 6a and 6c show that the distal end 42 of the neck 40 need not be coplanar with the distal surface 54 of the annular flange 50.

In the exemplary embodiments of FIGS. 6a, 6b and 6c the base 111 of the cavity 110 of the coupling piece 100 has a recess at the centre thereof, that is to say, it is not substantially flat as in the exemplary embodiment of FIGS. 3 to 5 and 6d.

As can be seen in FIG. 6b, the base 111 of the cavity 110 need not to rest on the distal end 42 of the neck 40 of the foot 1, as in the exemplary embodiment of FIG. 6b the base 111 rests on the distal surface 54 of the annular flange 50.

The exemplary embodiments of FIGS. 6a to 6d represent some of the possible variations of a support assembly according to the present invention. The exemplary embodiments shown and described hereinabove are not exhaustive and other embodiments are possible within the scope of the claims.

It will be understood that various parts of one embodiment of the invention can be freely combined with parts described in other embodiments, even being said combination not explicitly described, provided that such combination is within the scope of the claims and that there is no harm in such combination.

## Claims

1. Foot (1) for a kitchen appliance for processing food comprising:
a single body of an elastomeric material;
a support base (10) on a support surface of the foot;
a deformable neck (40) at least in a transversal direction relative to a longitudinal axis of the foot (1) and for attachment to a part of the kitchen appliance;
**characterized in that**
said base (10) constitutes a single support surface of the foot (1);
and **in that** said single body of elastomeric material comprises:
a first section (20) having a progressive narrowing from the support base (10) following an axial rising direction of the foot (1);
an annular portion (30) defining a step with respect to the end of said first section (20) and said neck (40);
the neck (40) starting from said annular portion (30), and
an annular flange (50) deriving from a distal portion of said neck (40) and defining an annular throat (41) together with said step of the annular portion (30).

2. Foot (1), according to claim 1, wherein the support base (10) defines a concave surface.

3. Foot (1), according to claim 1 or 2, wherein said single body is a body of revolution and said neck (40) is coaxial with said first section (20) having a progressive narrowing.

4. Foot (1), according to claim 2 or 3, wherein it comprises at least one through hole (31) between the annular portion (30) and the concave surface of the support base (10).

5. Foot (1), according to any one of the preceding claims, wherein said first section (20) having a progressive narrowing comprises a first portion (21) of an essentially cylindrical shape and a second portion (22) with progressive narrowing.

6. Foot (1), according to any one of the preceding claims, wherein said annular flange (50) defines a distal surface (54) and a surface (53) proximal to said first section (20) having a progressive narrowing, said distal surface (54) and/or said proximal surface (53) being perpendicular to the axial direction of the foot (1).

7. Foot (1), according to claim 6, wherein the distal surface (54) of said annular flange is coplanar with a distal end (42) of the neck.

8. Foot (1), according to any one of the preceding claims, wherein said annular flange (50) has a progressive narrowing following the axial rising direction of the foot (1).

9. Foot (1), according to any one of the preceding claims, wherein the neck (40) comprises at its distal end (42) at least one hole (43) for receiving a connecting element with the kitchen appliance.

10. Support assembly (1000) for a kitchen appliance, comprising:
a foot according to any one of claims 1 to 9;
a coupling piece (100) for being attached to a portion a base of the kitchen appliance and snap-fitted to a distal portion of the single body of the foot.

11. Support assembly (1000), according to claim 10, wherein the coupling piece (100) defines a cavity (110) for the reception of at least the annular flange (50) of the foot (1), said cavity (110) comprising at least one lip (120) for snap fitting with the annular throat (41) of the foot (1).

12. Support assembly (1000), according to claim 11, wherein said cavity (110) defines a base (111) for resting on the distal end (42) of the neck (40) of the foot (1).

13. Support assembly (1000), according to any one of claims 10 to 12, wherein the coupling piece (100) further comprises a through hole (130) for the passage of a connecting element with the kitchen appliance, said hole (130) of the coupling piece (100) being coaxial with a corresponding hole (43) for receiving said connecting element at the distal end (42) of the neck (40) of the foot (1).

14. Kitchen appliance for processing food comprising at least three feet (1) according to any one of claims 1 to 9.

15. Kitchen appliance for processing food comprising at least three support assemblies (1000) according to any one of claims 10 to 13.
